(19) Europäisches Patentamt / European Patent Office / Office européen des brevets

(11) **EP 3 706 889 B1**

(12) **EUROPEAN PATENT SPECIFICATION**

(45) Date of publication and mention of the grant of the patent:
**28.05.2025 Bulletin 2025/22**

(21) Application number: **18875099.6**

(22) Date of filing: **07.11.2018**

(51) International Patent Classification (IPC):
**B01D 69/00** (2006.01)     **B01D 69/14** (2006.01)
**B32B 15/00** (2006.01)     **H01M 4/86** (2006.01)
**H01M 4/90** (2006.01)

(52) Cooperative Patent Classification (CPC):
**B01D 53/228; B01D 53/326; B01D 69/145;
B01D 71/02231; B01D 71/261; B32B 1/00;
B32B 3/08; B32B 9/045; B32B 27/08; B32B 27/32;**
B01D 2257/504; B01D 2311/2684; B01D 2311/2696;
B01D 2325/10; B01D 2325/26;     (Cont.)

(86) International application number:
**PCT/US2018/059581**

(87) International publication number:
**WO 2019/094435 (16.05.2019 Gazette 2019/20)**

(54) **ARTIFICIAL LUNG FOR ELECTROCATALYSIS**

KÜNSTLICHE LUNGE ZUR ELEKTROKATALYSE

POUMON ARTIFICIEL POUR ÉLECTROCATALYSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2017 US 201762582798 P**
**12.03.2018 US 201862641646 P**

(43) Date of publication of application:
**16.09.2020 Bulletin 2020/38**

(73) Proprietor: **The Board of Trustees of the Leland Stanford**
**Junior University**
**Stanford, CA 94305-2038 (US)**

(72) Inventors:
• **CUI, Yi**
**Stanford, CA 94305 (US)**
• **LI, Jun**
**Stanford, CA 94305 (US)**
• **CHU, Steven**
**Menlo Park, CA 94025 (US)**

(74) Representative: **FRKelly**
**Waterways House**
**Grand Canal Quay**
**Dublin D02 PD39 (IE)**

(56) References cited:
WO-A1-2015/013765     US-A- 3 846 236
US-A1- 2016 186 334     US-A1- 2016 186 334

• **ROTH CHRISTIAN J ET AL: "A simplified parametrised model for lung microstructures capable of mimicking realistic geometrical and mechanical properties", COMPUTERS IN BIOLOGY AND MEDICINE, vol. 89, 31 December 2017 (2017-12-31), pages 104 - 114, XP085222107, ISSN: 0010-4825, DOI: 10.1016/ J.COMPBIOMED.2017.07.017**
• **JUSTIN H. LO ET AL: "Gas Transfer in Cellularized Collagen-Membrane Gas Exchange Devices", TISSUE ENGINEERING PART A, vol. 21, no. 15-16, 15 July 2015 (2015-07-15), US, pages 2147 - 2155, XP055699960, ISSN: 1937-3341, DOI: 10.1089/ten.tea.2014.0369**

EP 3 706 889 B1

- **ATENCIA J ET AL: "Controlled microfluidic interfaces", NATURE, MACMILLAN JOURNALS LTD., ETC, LONDON, vol. 437, 29 September 2005 (2005-09-29), pages 648 - 655, XP002662053, ISSN: 0028-0836, [retrieved on 20040928], DOI: 10.1038/NATURE04163**
- **THANASILP, S ET AL.: "Effect of Pt: Pd atomic ratio in Pt-Pd/C electrocatalyst-coated membrane on the electrocatalytic activity of ORR in PEM fuel cells", RENEWABLE ENERGY, vol. 36, no. 6, 1 June 2011 (2011-06-01), pages 1795 - 1801, XP055608343**
- **LI, J ET AL.: "Efficient electrocatalytic C02 reduction on a three-phase interface", NATURE CATALYSIS, vol. 1, no. 8, 23 July 2018 (2018-07-23), pages 592 - 600, XP055608345**

(52) Cooperative Patent Classification (CPC): (Cont.)
B32B 2255/10; B32B 2255/205; B32B 2307/724; B32B 2307/7265; B32B 2307/728; B32B 2307/73; B32B 2307/732; B32B 2535/00; H01M 4/92; H01M 8/002; H01M 8/083; Y02C 20/40; Y02E 60/36; Y02E 60/50

**Description**

**FIELD OF THE INVENTION**

The present invention relates generally to electrocatalytic systems. More particularly, the present invention relates to lung-inspired flexible electrocatalytic membrane configurable for $CO_2$ Reduction Reaction ($CO_2$RR), Oxygen Reduction Reaction (ORR), Oxygen Evolution Reaction (OER), Hydrogen Evolution Reaction (HER), Hydrogen Oxidation Reaction (HOR), or Nitrogen Reduction Reaction (NRR).

**BACKGROUND OF THE INVENTION**

The rapid global climate change due to fossil fuel emissions has been driving an unprecedented scale of motivation and investment towards developing sustainable energy sources and technologies, such as fuel cells, metal-air batteries, electrochemical water splitting and $CO_2$ reduction. All these commercial applications are correlated with the development and utilization of efficient electrocatalytic systems. Electrochemical reduction of carbon dioxide is a critical approach to reduce the accelerating $CO_2$ emission globally and generate value-added products. Electrocatalytic oxygen reduction and evolution reactions are among the hearts of current clean energy technologies. Membrane reactors for gas-liquid reactions in the presence of a catalyst are known e.g. from WO 2015/013765 A1.

While predominant effort has been dedicated to the catalyst composition and structure designs, the fast gas delivery towards and from the catalyst surface has remained as a key challenge.

**SUMMARY OF THE INVENTION**

To address the needs in the art, an electrochemical gas conversion device is provided, that includes a flexible membrane formed in a sack-shape, where the membrane includes a gas permeable and liquid-impermeable membrane, where at least a portion of the flexible membrane is surrounded by a liquid electrolyte held by a housing, where the flexible membrane includes a gas interior, an electrically conductive catalyst coating on an exterior surface of the flexible membrane, where the flexible membrane and the electrically conductive catalyst coating are configured as a anode or a cathode, and an inlet/outlet tube configured to flow the gas to the interior, from the interior, or to and from the interior of the flexible membrane.

According to one aspect of the invention, the membrane includes a nanoporous polyethylene (PE) membrane.

In another aspect of the invention, the liquid electrolyte can include a potassium hydroxide electrolyte, or a potassium bicarbonate electrolyte.

In a further aspect of the invention, the electrically conductive catalyst coating includes an electrocatalysts.

According to one aspect of the invention, the membrane further includes a hydrophilic nanoporous film, where the hydrophilic nanoproous film is disposed to absorb the liquid electrolyte continuously from a liquid electrolyte reservoir.

In yet another aspect of the invention, the membrane includes a porous membrane having pore sizes up to a 500nm pore radius.

According to one aspect of the invention, a gas composition in the flexible membrane, a composition of the liquid electrolyte, a thickness of the flexible membrane, a porosity of the flexible membrane, and a composition of the catalyst coating are configured for at least one of a $CO_2$ Reduction Reaction ($CO_2$RR), an Oxygen Reduction Reaction (ORR), an Oxygen Evolution Reaction (OER), a Hydrogen Evolution Reaction (HER), a Hydrogen Oxidation Reaction (HOR), or a Nitrogen Reduction Reaction (NRR). In one aspect, the $CO_2$RR configuration includes a $CO_2$ gas composition, a $H_2O$ liquid composition, a flexible hydrophobic nanoPE membrane having a thickness of up to 12 $\mu$m, an Au catalyst layer having a thickness in a range of 10 to 20 nm, where the Au catalyst layer includes Au nanoparticles having a particle diameter in a range of 10 to 30 nm. In another aspect, the ORR configuration includes an $O_2$ gas composition, a $H_2O$ liquid composition, a flexible hydrophobic nanoPE membrane having a thickness of up to 12 $\mu$m, a bi-layer Ag/Pt catalyst having a thickness in a range of 50 nm to 80 nm. In a further aspect, the OER configuration includes an $O_2$ gas composition, a $H_2O$ liquid composition, a flexible hydrophobic nanoPE membrane having a thickness of up to 12 $\mu$m, an Au/Ni/FeOx catalyst layer having a thickness in a range of 50 nm to 100 nm. In another aspect, the HER configuration includes an $H_2$ gas composition, a $H_2O$ liquid composition, a flexible hydrophobic nanoPE membrane having a thickness of up to 12 $\mu$m, an Ag/Pt catalyst layer having a thickness in a range of 40 nm to 80 nm. In another aspect, the HOR configuration includes an $H_2$ gas composition, a $H_2O$ liquid composition, a flexible hydrophobic nanoPE membrane having a thickness of up to 12 $\mu$m, an Ag/Pt catalyst layer having a thickness in a range of 40 nm to 80 nm. In one aspect, the NRR configuration includes an $N_2$ gas composition, a $H_2O$ liquid composition, a flexible hydrophobic nanoPE membrane having a thickness of up to 12 $\mu$m, an Au catalyst layer having a thickness in a range of 10 nm to 20 nm.

According to one aspect of the invention, the membrane, and the housing are arranged in an array of the membranes, or an array of the housings.

## BRIEF DESCRIPTION OF THE DRAWINGS

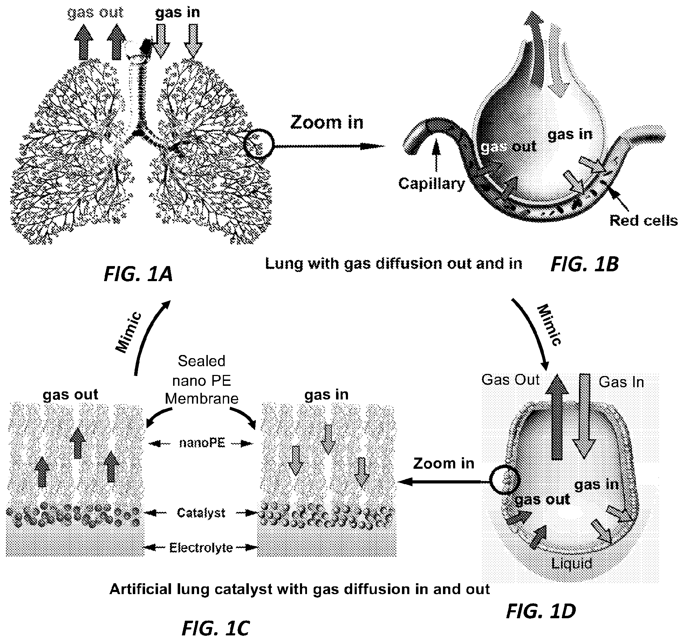

FIGs. 1A-1D — show schematic drawings of an artificial lung electrocatalytic system. (**1A** and **1B**) show schematic drawings of a human lung, bronchial connection with alveoli, and a single alveolus. The black arrows indicate the outward diffusion of gas, and the gray arrows indicate the inward diffusion of gas. (**1C**) shows a schematic drawing of a sack-shape artificial alveolus for dual functions of rapid gas delivery from and to the catalyst surface. (**1D**) shows a zoom-in schematic of a sack-shape artificial alveolus. It is gas permeable and liquid-impermeable membrane with a portion surrounded by a liquid electrolyte held by a housing, according to one embodiment of the invention, according to embodiments of the invention.

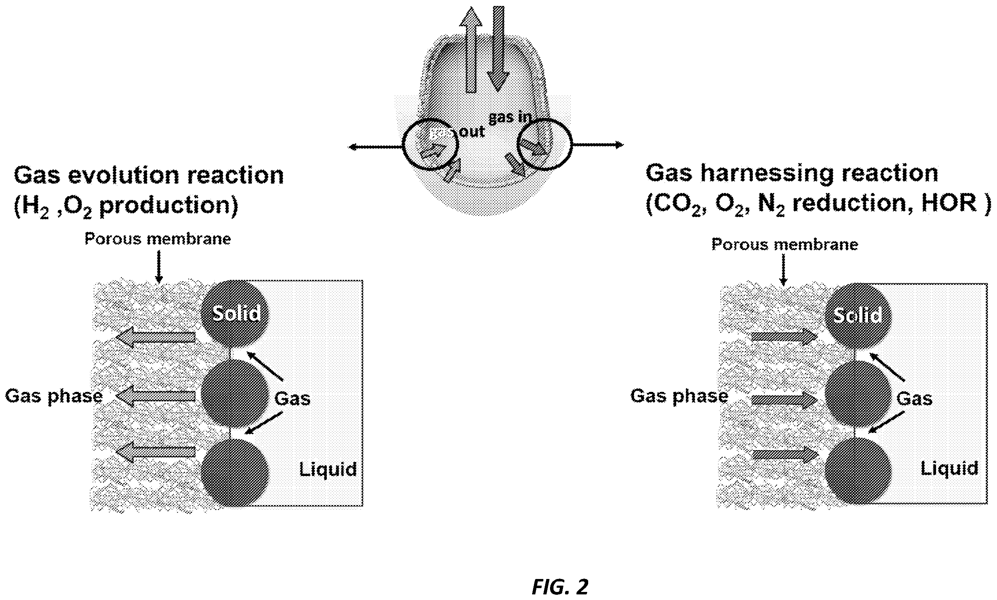

FIG. 2 — shows the alveolus-like sack-shape PE structure create a barrier impenetrable to water but accessible to two-way gas transport. For gas evolution reactions (similar to the exhaling process), the newly produced gas molecules can efficiently diffuse from the catalyst/electrolyte interface toward the gas phase without the additional energy cost of bubble formation (left). For gas harnessing reactions (similar to the inhaling process), gas reactants can be efficiently delivered from the gas phase to the electrochemical reaction three-phase contact lines without pre- dissolving into the bulk of the electrolyte (right) , according to the current invention.

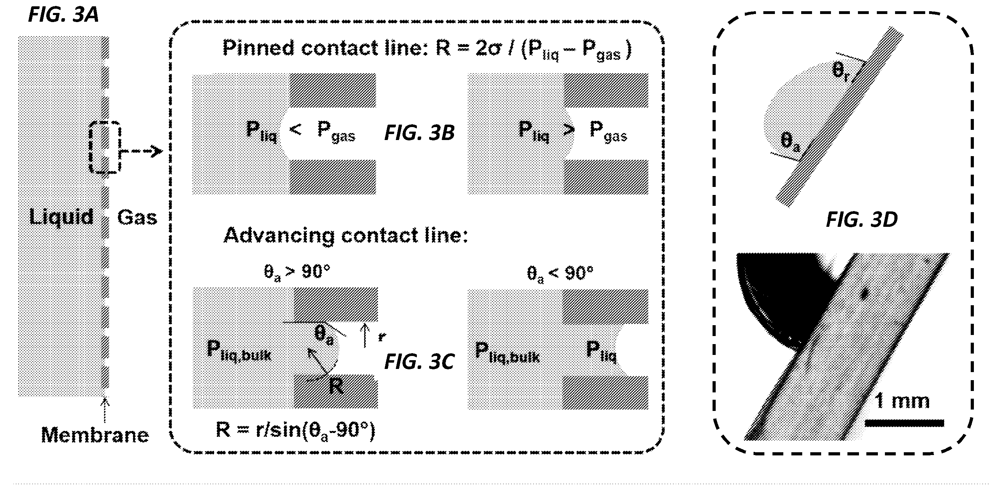

FIGs. 3A-3D — show (**3A**) Liquid and gas separated by a membrane. (**3B**) Pinned contact line at the pore entrance. (**3C**) Advancing contact line inside the pore when $\theta_a$ >90° and $\theta_a$ <90° respectively. (**3D**) Schematic and measurement of the advancing contact angle of 1 M KOH solution on a smooth PE surface using the tilting stage method, according to the current invention.

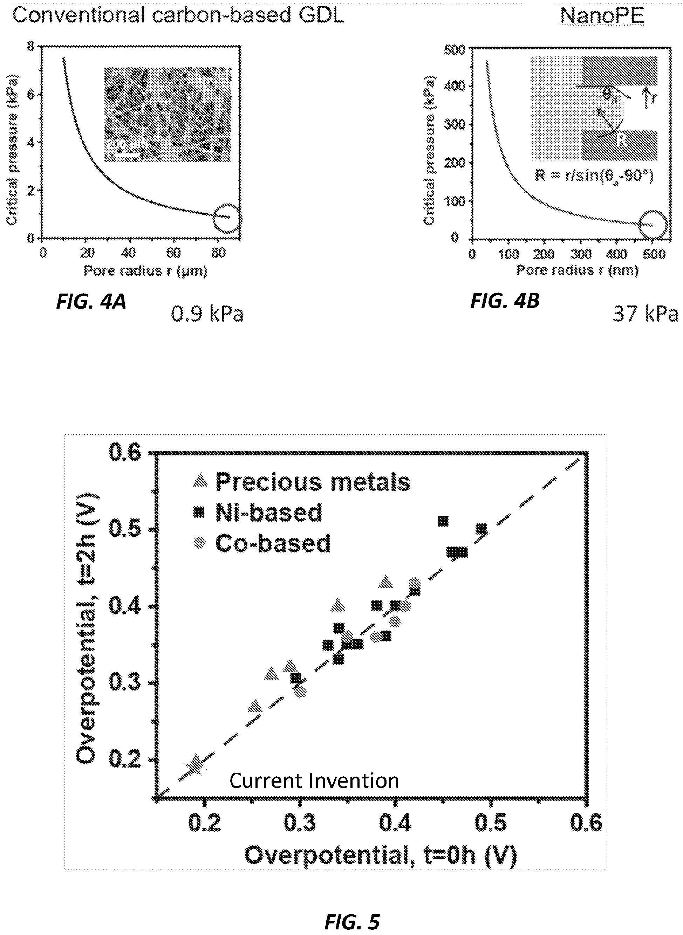

FIGs. 4A-4B — shows (**4A**) the critical burst-through pressure for a carbon-based GDL as a function of its pore radius. Inset: SEM image of the carbon-based GDL. (**4B**) the calculation result of the critical burst-through pressure for the nanoPE membrane as a function of the pore radius. Inset: liquid-vapor interface advancing inside the pore with an advancing contact angle $\theta_a$ greater than 90°, according to one embodiment of the invention.

FIG. 5 — shows an overpotential comparison of the current invention (shown as "star" data-point) with other previously reported OER systems in the literature (shown as "square" "triangular" "circular" data-point) at 10 mA·cm$^2$.

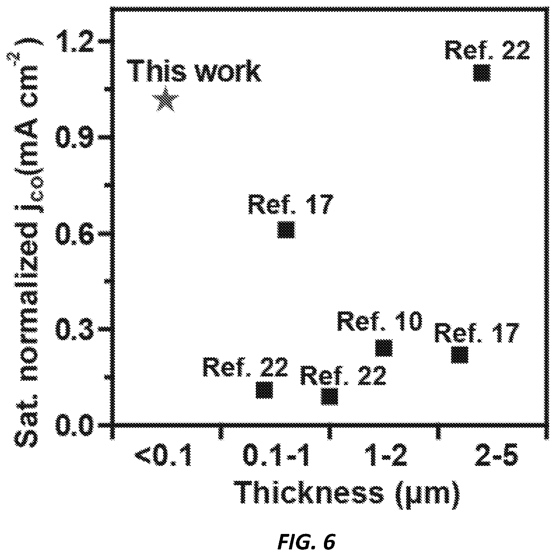

FIG. 6 — shows a comparison of the saturated normalized current densities of CO production versus catalyst thickness for representative Au catalysts in the literature (shown as "square" data-point), and the results of the current invention (shown as "star" data-point), according to the current invention.

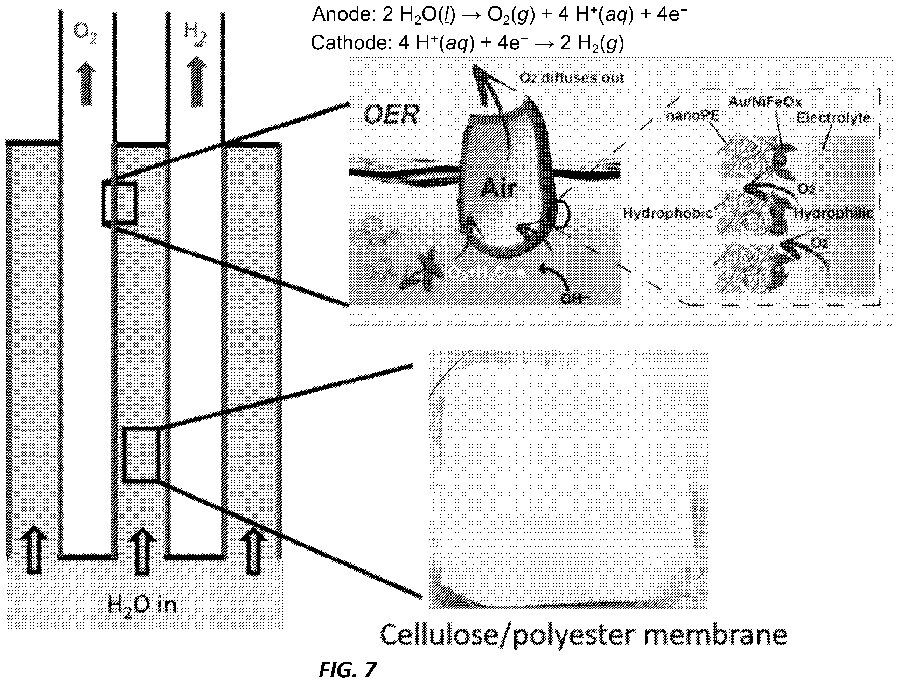

FIG. 7 — shows schematics drawings of overall watersplitting combining OER and HER. Water is adsorbed by capillary action of cellulose/polyester membrane. Gas (product) separation is achieved by directly diffusing the product species in the gas phase through the PE membrane, according to the current invention.

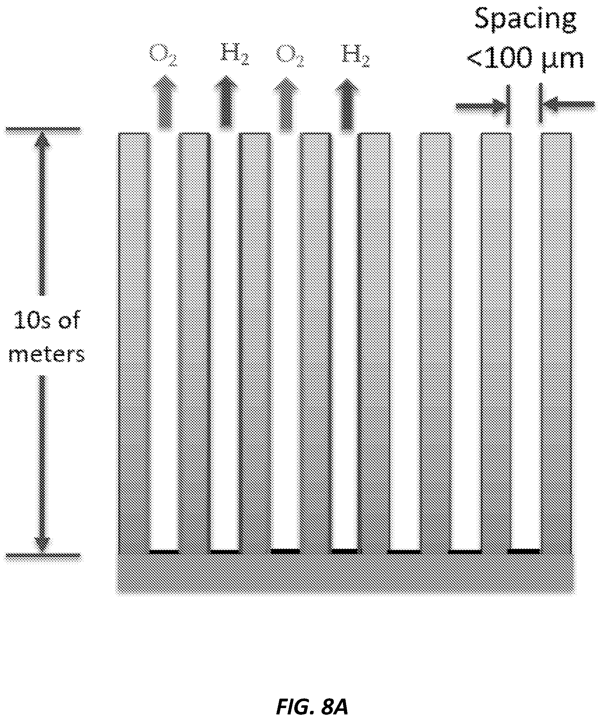

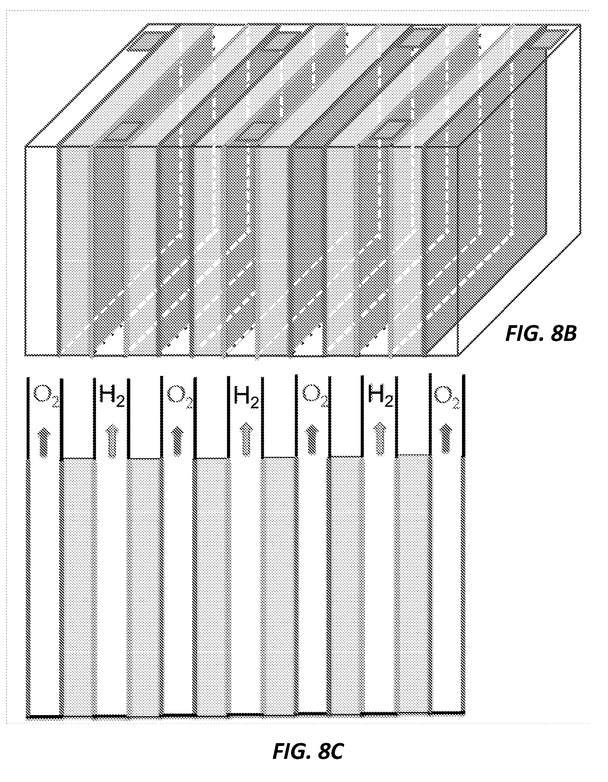

FIGs. 8A-8C — show schematic drawing of a 3D integrated electrolysis with the potential to build high electrolysis devices, according to the current invention.

## DETAILED DESCRIPTION

The current invention provides a device having an efficient gas exchange (both delivery towards or extract from) with an electrocatalyst surface, by lowering their overpotential, increasing their activities, and optimizing their selectivity. More specifically, the invention provides a new catalytic system by mimicking the alveolus structure in mammal lungs with high gas permeability, but very low water diffusibility, whereby a unique catalyst design concept of "artificial lung" is provided. This general artificial alveolus design demonstrates a new paradigm for three-phase catalysis with a small catalyst thickness less than 100 nm.

According to one embodiment, the current invention specifically mimics a alveolus with bronchioles for gas transfer in and out of the mammalian lung as an enclosed chamber formed by the gas permeable, water-impermeable membrane. The size of the enclosed chamber is tunable and is surrounded, in part, by liquid with gas in its interior. **FIGs. 1A-1D** show schematic drawings of an artificial lung electrocatalytic system. Specifically, **FIG. 1A** and **FIG. 1B** show schematic drawings of a human lung, bronchial connection with alveoli, and a single alveolus. The black arrows indicate the outward diffusion of gas, and the gray arrows indicate the inward diffusion of gas. Whereas, **FIG. 1D** shows a schematic drawing of a sack-shape artificial alveolus for dual functions of rapid gas delivery from and to the catalyst surface. Further shown in **FIG. 1C** is a zoom-in schematic of a sack-shape artificial alveolus. It is gas permeable and liquid-impermeable membrane with a portion surrounded by a liquid electrolyte held by a housing, according to one embodiment of the invention, according to embodiments of the invention.

One key aspect of the current electrochemical device is its dual function of gas harnessing reactions and gas evolution reactions (see **FIG. 2**). The mammalian lung represents gas exchange system at the liquid-solid-gas contact lines in a dual-direction manner. Such concept is subtly mimicked for the (1) electrocatalytic gas evolution systems and (2) gas harnessing systems to realize the dual functions of rapid gas generation from and delivery to the electrochemical reaction interface. The aspect is enabled by a catalyst-coated, nanoporous PE membrane in a pouch structure, according to the current invention.

In one exemplary embodiment, polyethylene (PE) membranes were provided having interconnected nanofibers with a variety of pore sizes ranging from 80 to 1000 nm. To fabricate the pouch structure, a piece of PE membrane (12 $\mu$m-thick) is formed into any desired size, for example $2.5 \times 2$ cm$^2$).

The porous membrane is not limited to the nano-polyethylene membrane. The membrane can be configured with the key operational criteria of (1) efficient mass transport for gas delivery and release, (2) ample three-phase contact regions for electrocatalytic reactions, and (3) robust hydrophobicity that can last for substantially longer time than conventional GDLs under electrochemical working conditions.

A mammalian lung features one of the most sophisticated, nature-designed systems for gas exchange. Air is inhaled through bronchioles towards alveoli, the most elementary units of a lung, and is reversed during the exhale process. Encompassing by several thin epithelial cell layers of only a few microns thick, an alveolus membrane enables two-way gas diffusion into and out of the blood stream while remaining impenetrable to liquid. Furthermore, instead of plainly being a conventional gas diffusion layer, the inner surface of alveoli is covered by a layer of lecithin-type molecules to reduce surface tension at the gas interface, while the outer membrane surface remains hydrophilic to closely contact with the blood stream. In the current invention, this feature is created for the electrocatalytic $CO_2$ reduction reaction ($CO_2$RR), oxygen reduction reaction (ORR), oxygen evolution reaction (OER) systems, using a catalyst-coated, nanoporous PE membrane as the gas penetration interface. Flexible, hydrophobic, nanoporous polyethylene (nanoPE) membranes were rolled into a closed compartment that is analogous to alveolus (i.e., alveolus-like PE, or alv-PE) to generate the gas-liquid-solid three-phase interface. In addition, a very unique feature of our design is capable of switching between an open, conventional electrode structure, and an alveolus-mimicking, folded structure that separates two different phases of liquid and gas, thus enabling direct and unambiguous comparison on the same catalyst. To ensure efficient gas diffusion to/from the catalyst-electrolyte interface on the exterior wall of the membrane, the thickness of the artificial alveoli membrane is more critical to affecting gas diffusion length than the actual size of it. Provided herein is the three-phase contact property, where the current density decreases as the thickness of membrane increases, which shows the preferred thickness is less than or up to 12$\mu$m. The pore size of the artificial alveoli membrane is another important contributing factor. The electrolyte shouldn't wet the membrane to enable efficient gas diffusion and to realize good three-phase interaction. As disclosed herein, the preferred pore radius should be less than 500 nm.

Various applications are provided. The essence of the artificial lung adaptation here is the extremely efficient gas exchange (i.e., delivery to or extract from) with the catalyst surface, by having an intimate three-phase contact (solid catalyst, liquid, and gas), which presents a new paradigm for a broad range of catalytic reactions involved in three phases. This can be utilized in several important energy conversion applications, including $CO_2$ reduction reaction ($CO_2$RR), oxygen reduction reaction (ORR), oxygen evolution reaction (OER), hydrogen evolution reaction (HER), hydrogen oxidation reaction (HOR), and nitrogen reduction reaction (NRR). According to embodiments of the invention, depending on the application, the electrically conductive catalytic coating can include any electrocatalyst, such as Ag, Au, Ag/Pt, NiFeOx, or Cu.

For the $CO_2$ reduction reaction ($CO_2$RR), the alveolus-like PE structure enables efficient $CO_2$ delivery with high flux, but inhibits water penetration, mimicking the alveolus membrane. A local pH increase is also maintained, which further promotes the strong differentiation of the electrocatalytic reduction rate of $CO_2$ over $H_2O$. This artificial lung design also maximizes the efficiency of the three-phase contact ($CO_2$ gas, solid catalyst, liquid water), featuring excellent $CO_2$ reduction activity performance even with multiple times lower catalyst loading. As a result, substantial high permeability for $CO_2$ access and adsorption on catalyst surface was achieved at a large variety of $CO_2$ flow rates, leading to a high CO production selectivity of ~ 92% faradaic efficiency at -0.6 V vs. reversible hydrogen electrode (RHE). This Au/PE catalyst exhibits one of the highest geometric current density of CO production (~ 25.5 mA cm-2) at -0.6 V vs. RHE, and the most significant saturated normalized current density of CO production (~ 1 mA cm- 2) at -0.8 V vs. RHE at very thin catalyst thickness of 20-80 nm.

For oxygen reduction reaction (ORR), $O_2$ molecules from gas phase can efficiently diffuse through the PE membrane onto the catalyst/electrolyte interface, bypassing the bottleneck of low $O_2$ solubility in water and significantly enhancing the catalytic performances. For instance, using a typical bi-layer of Ag/Pt ORR catalyst, the alveolus-like PE structure leads to current densities of ~ 25 times higher than an open electrode structure. This significantly enhanced ORR activity is attributed to the much increased available $O_2$ flux to the electrocatalytic solid-liquid-vapor interface.

For oxygen evolution reaction (OER), the $O_2$ molecules formed can also quickly diffuse through the PE membrane into the gas phase, waiving the energy cost of bubble nucleation. As a result, a clear reduction of overpotential is achieved compared to those of conventional, open electrode structures or even gas-diffusion-layer-based electrodes. For an Au/NiFeOx catalyst, a record-low overpotential of 190 mV at 10 mA·cm$^{-2}$ are achieved.

In addition to its high efficiency, the catalyst-coated alveolus-like PE structure features an ultrathin layer of the catalyst. The typical thickness of the catalyst deposited on PE membrane is around 50-100 nm, substantially thinner than most of the previously reported catalyst thickness (i.e., hundreds of nm to tens of microns). Thus, an extremely high mass activity is realized in the system of the current invention, which significantly reduces cost. The high efficiency of such a low catalyst loading is attributed to the unique structure of the membrane device, where the gas reactants and products are delivered continuously through the nanoporous PE membrane to the three-phase contact lines, thus enabling a full utilization of almost all the catalyst atoms. This new continuous gas delivery pathway does not exist in the conventional catalyst/electrode designs.

Several variations are possible, where the current invention is readily applied to many other multi-phase catalytic systems. The catalysts can be conveniently tuned to fit for different electrochemical reactions. The PE membrane can also be replaced with other nanoporous, hydrophobic membranes with high temperature stability. The hydrophobic PE membranes can also be integrated with other hydrophilic nanoporous films to allow fast water adsorption, active electrocatalytic reaction, and then efficient gas (product) separation.

In the current exemplary embodiments, the nanoPE membranes include interconnected nanofibers with a variety of pore sizes ranging from 80 to 1000 nm. In order to maximize the electrochemical reaction kinetics with more active materials while not compromising the rates of gas transfer, the effective nanostructure surface area was optimized by controlled catalyst deposition onto the nanoPE. The ORR electrode was formed by sequential deposition of 40 nm Ag and 10 nm Pt by magnetron sputtering. The membrane surface is covered by a layer of metal particles with average particle sizes of ~ 20 nm, while the pores remain open. Further increasing the metal thickness to over 100 nm results in significant decrease of pore size and quantity. The goal is to optimize the effective nanostructure surface area to maximize the electrochemical reaction kinetics with more nanoparticles while not compromising the rates of gas transfer.

The crystal structure of the surface metal layers was characterized by X-ray diffraction (XRD), confirming the face-centered-cubic structures of Ag and Pt on the surface. Energy dispersive X-ray (EDX) spectroscopy elemental mapping shows that both Ag and Pt were deposited uniformly across the entire nanoPE membrane. Similarly, the OER electrode was formed by deposition of 20-30 nm Au as a charge conduction layer followed by electrodeposition of a layer of NiFeO$_x$. EDX elemental mapping shows that Au, Ni and Fe are deposited uniformly across the PE membrane. High-resolution X-ray photoelectron spectroscopy (XPS) for the Ni 2p and Fe 2p regions of the as-deposited Au/NiFeO, layer were measured. The Ni 2p3/2 peak at 854.8 eV and Fe 2p3/2 peak at 710.9 eV are indicative of $Ni^{2+}$ and $Fe^{3+}$, respectively, suggesting the formation of Au/NiFeO$_x$.

To identify the location of the gas-liquid-solid three-phase contact line near the catalyst and verify that liquid does not wet the bulk of the nanoPE membrane, the critical burst-through pressure $\Delta P_c$ (i.e., the minimum pressure difference between the liquid and the gas for liquid to enter the pores) is calculated based on the Young-Laplace equation assuming cylindrical pores. The critical burst-through pressure $\Delta P_c$ is $2\sin(\theta_a-90°)/r$ (Please see the details of the analysis below), where $\theta_a$ is the intrinsic advancing contact angle of the electrolyte on PE (measured to be 97°) and the pore radius $r$ is in the range of 40-500 nm based on SEM images of the nanoPE membrane. This calculation result suggests that the liquid pressure has to be at least 37 kPa higher than the gas pressure in order for the liquid to enter the pores. In one experiment, the maximum hydraulic pressure ($\rho gh$) corresponding to a nanoPE film that was dipped 1 cm into the solution was only 100 Pa. Therefore, the liquid should not enter the pores of the membrane based on this model. In practice, instead of having the catalyst metal film only on the membrane top surface, the catalyst may be deposited into the pores within a short distance. While this may cause the electrolyte to wet the catalyst within the pores, eventually the liquid will be pinned where it meets the bare PE surface. In addition, the shape of the pores is more irregular than a perfect cylinder. In this case, the pores can form (i) re-entrant cavities on the surface of the membrane, which requires an even higher critical burst-through pressure because the curvature of the liquid-vapor interface is higher for $\theta_a$ to remain the same; (ii) a vertical sidewall; (iii) a tapered sidewall where liquid may enter due to reduced burst-through pressure. However, liquid will be pinned when it meets the first reentrant cavity and will not wet the rest of the membrane.

Regarding the details of $\Delta P$, for liquid and gas separated by a porous membrane (**FIG. 3A**), whether the liquid will wet the pores of the membrane depends on wettability and the pore geometry. Consider a membrane with pores that are perpendicular to its surface (**FIG. 3B**). Assuming the liquid-vapor interface is initially pinned at the pore entrance, the mean radius of curvature R of the interface is determined by the difference in the pressure across the interface according to the

Young-Laplace equation:

$$\Delta P = P_{liq} - P_{gas} = 2\sigma / R, \qquad\qquad (1)$$

where $P_{liq}$ and $P_{gas}$ are liquid and gas pressure respectively, $\sigma$ is the surface tension of the liquid, and $R$ is the mean radius of curvature of the interface. Equation (1) indicates that the shape of the liquid-gas interface in the pinned state solely depends on the relative pressure (i.e., the interface curves towards the side with a lower pressure).

For the contact line to deepen and enter the pores, the contact angle that the liquid makes on the sidewall of the pore needs to be the intrinsic advancing contact angle $\theta_a$ (**FIG. 3C**). For a non-ideal surface, $\theta_a$ is typically greater than the static contact angle. If $\theta_a$ is greater than 90 degrees, the pressure on the liquid side has to be greater than that on the gas side according to the Young-Laplace equation (equation (1)). This critical burst-through pressure $\Delta P_c$ (the pressure difference between the liquid and the gas) is related to $\theta_a$ as,

$$\Delta P_c = 2\sigma \, sin(\theta_a - 90)/r, \qquad\qquad (2)$$

where $r$ is the pore radius and we have assumed that the pore is cylindrical. Equation (2) indicates that the more hydrophobic the membrane surface is (i.e., higher $\theta_a$), a higher pressure on the liquid side is required to push liquid into the pores.

On the contrary, if $\theta_a$ is less than 90 degrees, for liquid to advance in the pores requires the liquid pressure to be less than the gas pressure, also governed by equation (2). In fact in a system where $P_{liq,bulk} \approx P_{gas}$, an advancing contact angle lower than 90° means that $P_{liq,bulk}$ is always greater than $P_{liq}$ at the liquid-gas interface. In other words, liquid will spontaneously enter and wet the entire pore.

To investigate the wetting state of KOH solution on the nanoPE membrane, the intrinsic advancing contact angle of KOH solution was measured on a smooth PE surface with a tilting stage method (**FIG. 3D**). KOH solution was added to a smooth PE substrate on a tilted stage and obtained the advancing contact angle just before the contact line moved downhill. The advancing contact angle is 97° which agrees reasonably well with literature (92°). Based on the measured $\theta_a$, and a surface tension of 75 mN/m for 1 M KOH solution, the critical burst-through pressure was calculated as a function of the pore radius for both nanoPE and PTFE-coated porous carbon typically used for the GDL. For a carbon-based GDL, the criti- cal burst-through pressure was calculated as ~0.9 kPa for its largest pore radius of ~85 $\mu$m (**FIG. 4A**). This relatively low burst-through pressure is consistent with the previous observation of water flooding of the GDLs, which may be due to the relatively larger pore size, carbon corrosion and the imperfect PTFE coating. In contrast, the nanoPE membrane presents a homogeneous surface composition and much smaller pore sizes. The critical burst-through pressure of the nanoPE was calculated as ~37 kPa (about 42 times higher than that of a GDL), even for its largest pore radius size of 500 nm (**FIG. 4B**), which indicates that liquid does not flood the nanoPE membrane.

To characterize the surface wettability of the same nanoPE membranes before and after plasma treatment, the apparent contact angle was measured by placing an electrolyte droplet on the nanoPE membrane. The nanoPE membrane clearly exhibited a hydrophobic nature with a contact angle of 105°, whereas the plasmatreated membrane had a much lower contact angle of 45°, indicating improved hydrophilic properties.

Turning now to the ORR, the ORR activity of the catalyst-coated PE membrane was investigated in a standard three-electrode system in an $O_2$-saturated 1 M KOH electrolyte. As stated previously, the Ag/Pt-coated PE membrane was rolled and sealed into a closed compartment (i.e., alv-PE) with gas phase inside for $O_2$ delivery. Metal catalysts with similar total thickness of ~ 50 nm, including pure Pt, pure Ag, and a bi-layer of Ag/Pt, were first investigated. The linear sweep voltammetry (LSV) curve of the pure Pt-coated PE membrane shows the highest onset potential of 0.95 V vs. RHE, while the current density is saturated quickly at ~ 80 mA·cm$^{-2}$ at 0.85 V vs. RHE due to insufficient electronic conductivity of Pt on nanoPE membrane. The bilayer of Ag/Pt coated alv-PE presents an onset potential of 0.90 V vs. RHE, clearly higher than that of pure Ag (0.84 V), and its current density continues increasing to a much higher level without being saturated. For example, when the applied voltage is 0.6 V vs. RHE, the ORR current density reaches ~ 250 mA·cm$^{-2}$

As expected, when the metal-coated PE membrane is unfolded as a flat, open structure (i.e., flat-PE) with both sides in contact with electrolyte, the ORR current density quickly drops to 10 mA·cm$^{-2}$ at 0.6 V vs. RHE and exhibits a clear plateau of limiting current density typically observed in diffusion-limited ORR measurements. Furthermore, with either the pre-treatment of the Ag/Pt-coated alv-PE membrane by plasma or the addition of electrolyte inside the alv-PE compartment, the current density drops to almost the same level as the Ag/Pt-coated flat-PE membrane. In addition, similar Ag/Pt bilayer catalysts were sputtered onto a flat Si substrate or carbon paper, and in both cases, the current density and onset voltages are even lower than those of a flat, metal-coated PE membrane. The Tafel slope, a parameter to represent the electrochemical reaction kinetics far from equilibrium, of the Ag/Pt-coated alv-PE membrane is calculated to be 43 mV·dec$^{-1}$, which is significantly smaller than those of other samples, indicating efficient charge transfer on the catalyst-electrolyte interface.

The ORR activity dependence on the Ag/Pt bi-layer catalyst thickness, tuned by the metal sputtering time, was also investigated. When the Ag/Pt bi-layer total thickness is increased from 25 to 100 nm, the ORR current density first increased to a maximum of 250 mA·cm$^{-2}$ at 0.6 V vs. RHE, and then decreased to less than 100 mA·cm$^{-2}$ accompanied with the appearance of a limiting current plateau. SEM images of the metal-coated membranes show that the current density decrease and the limiting current appearance are correlated to the blockage of nanopores on PE membranes. This comparison clearly indicates that the efficient passage of $O_2$ through nanopores of the alv-PE membrane is the origin of the significant increase of ORR activity, highlighting the importance of the bio-mimicry approach of the alveolus structure for $O_2$ uptake.

The ORR activity dependence on the $O_2$ concentration was demonstrated, using a mixture of Ar and $O_2$ gases under the same total pressure and flow rate (1 atm and 5 sccm). The ORR current density clearly increases with the $O_2$ concentration and does not show saturation even at > 80% of $O_2$, supporting the inventor's conjecture that the diffusion of $O_2$ molecules can be the rate-limiting step of the catalysis. Even at a very low $O_2$ concentration of 1% (in 1 atm of total pressure mixed with Ar), the ORR activity can still be clearly measured, which is unprecedented in previous reports.

The ORR activity of our Ag/Pt-coated alv-PE structure is compared with other results using catalyst-loaded gas diffusion layers, based on two common figures of merit for ORR, i.e., the potential at 10 mA·cm$^{-2}$ and the mass activity (MA) at 10 mA·cm$^{-2}$ where 10 mA·cm$^{-2}$ corresponds approximately to the current density expected for a 10% efficient solar-to-fuels conversion device. The MA is defined as current density achieved per mass of catalyst. It can be seen that our Ag/Pt-coated alv-PE structure exhibits more than 3 times higher mass activity (143 mA·mg$^{-1}$) than all the previously reported ORR catalysts with gas diffusion layers at similar overpotentials. The extremely high mass activity of this sample is attributed to the large surface area for metal catalyst deposition, as well as the asymmetric hydrophilicity/hydrophobicity feature of nanoporous PE membrane that is beneficial for fast $O_2$ penetration. The electrochemical stability of the Ag/Pt-coated alv-PE structure was tested by continuously running the ORR measurement under a potential of 0.6 V vs. RHE for 25 h. The current density was around 250 mA·cm$^{-2}$ with ~ 98% activity retention, indicating the excellent stability of our catalyst on alv-PE structure.

Turning now to the OER electrocatalytic activities, the capability of the catalyst-coated alv-PE structure for OER was also demonstrated. When the Au/NiFeO,-coated PE membrane was placed flat inside the electrolyte (1 M KOH), the potential for 10 mA·cm$^{-2}$ current density was ~ 1.51 V vs. RHE. The Au/NiFeO,-coated PE membrane was then rolled and sealed into a closed compartment (i.e., alv-PE), where the outer membrane was in contact with the electrolyte and the compartment inside was left dry for gas evolution. Compared to the same catalyst-coated flat-PE membrane where significant bubbles were observed at as low as 1.5 V, the alv-PE structure barely produced apparent bubbles from the catalyst on its outer surface. Thus, the Au/NiFeO,-coated alv-PE structure exhibited a much reduced overpotential and higher current density. The applied potential for 10 mA·cm$^{-2}$ current density was decreased to ~ 1.42 V vs. RHE, corresponding to only 190 mV overpotential. Further treatment of the catalyst-coated PE membrane by plasma to turn both surfaces hydrophilic or adding electrolyte to the inner compartment resulted in clear decrease of OER current densities and increase of overpotentials. The Tafel slopes calculated from these LSV curves show that the catalyst-coated alv-PE structure presents the smallest Tafel slope of 45 mV·dec$^{-1}$, suggesting fast charge transfer on the electrolytecatalyst surface.

The chemical composition of the NiFeO, layer was optimized by using different combinations of Ni(II) and Fe(II) ions in the precursor solutions for electrodeposition. Under the deposition conditions, the sample providing the best OER activity had a precursor ratio of Ni:Fe of 1:1, while inductively coupled plasma mass spectrometry (ICP-MS) indicates that the actual atomic ratio of Ni:Fe in this catalyst is 3:5. The thickness of the overall Au/NiFeO, catalyst film was then tuned either for the Au layer thickness via the sputtering time, or the $NiFeO_x$ layer thickness via different electrodeposition charges. In both cases, the increase of catalyst film thickness first leads to the OER activity enhancement, while further increase of the film thickness decreases its OER activity. Corresponding SEM images also indicate that the decrease of the catalytic activity is attributed to the blockage of the nanopores on the PE membranes, consistent with the aforementioned observation of ORR activity dependence on the catalyst thickness.

Moreover, the OER activity of different PE thickness was further investigated. With the same catalyst loading, increasing the PE membrane thickness from 12 to 100 $\mu$m leads to impaired OER activity, including increased overpotentials and decreased current densities. In addition, when a conventional gas-diffusion-layer (~ 300 $\mu$m thick) was used to load the same catalyst, a clear difference of overpotential and current density is also observed. This difference can also be described by the gas bubble evolution, where abundant bubbles were formed on the liquid-side of the gas-diffusion-layer. Thus, when the gas diffusion layer is significantly thicker (compared to the nature-designed alveolus membrane), the gas delivery path is not continuous and instead is broken by water. Additional gas bubble nucleation energy is then required to transport $O_2$ molecules from the OER interface towards the gas phase. However, in our alv-PE structure with 12 $\mu$m thickness, the continuous gas pathway to the gas-liquid-solid interface enables the direct transfer of newly formed $O_2$ molecules into the gas phase, thus significantly reducing its overpotentials.

The overpotentials at 10 mA·cm$^{-2}$ OER current density for different catalysts were summarized and compared. The performance of Au/NiFeO, is further compared with recent reported state-of-the-art OER catalysts, where **FIG. 5** shows an overpotential comparison of the current invention (shown as "star" data-point) with other previously reported OER systems in the literature (shown as "square" "triangular" "circular" data-point) at 10 mA·cm$^2$. The initial activity of each film is plotted vs. its activity after 2 h of continuous OER at 10 mA·cm$^{-2}$. Previously benchmarked OER catalysts were categorized into three groups on the basis of their compositions, namely Nibased, Co-based and precious metal-based ones. It can be clearly seen that the embodiment using an Au/NiFeO,-coated alv-PE structure presents the smallest overpotential of 190 mV at 10 mA·cm$^{-2}$ without *iR* correction, same as the previously reported best result on gelled FeCoW oxyhydroxides (overpotential of 191 mV) on a geometric surface area basis.

Finally, the electrochemical stability of the Au/NiFeO,-coated alv-PE structure was demonstrated by continuously running the OER measurement under a potential of 1.45 V vs. RHE for 200 h. The current density was almost retained over 22 mA·cm$^{-2}$ with ~ 97% activity retention during the entire testing period, suggesting the excellent stability of the catalyst.

For the electrocatalytic ORR and OER systems using a catalyst-coated, nanoporous PE membrane as the gas penetration interface, a unique feature of the current invention is the capability for switching between an open, conventional electrode structure, and an alveolus-mimicking, folded structure that separates two different phases of liquid and gas, thus enabling direct and unambiguous comparison of the two structures using the same catalyst. Using a bilayer of Ag/Pt ORR catalyst as an example, the alv-PE structure leads to current densities of ~ 25 times higher than an open electrode structure. This significantly enhanced ORR activity is attributed to the greatly increased available $O_2$ flux to the electrocatalytic solid-liquid-vapor interface.

Similarly, for a NiFeO$_x$ OER catalyst, the alv-PE structure compartment allows for the fast transport of newly formed $O_2$ molecules into an existing gas phase, waiving the energy costs of the bubble nucleation process. Thus, a clear reduction of overpotential is achieved compared to those of conventional, open electrode structures or even gas-diffusion-layer-based electrodes.

Turning now to the electrocatalytic $CO_2$ reduction on the three-phase interface, electrochemical reduction of the carbon dioxide is a critical approach to reduce the accelerating emission of the $CO_2$ globally and generate value-added products. While optimization of catalyst activity/selectivity is important, until now improving and facilitating the catalyst accessibility to high concentration $CO_2$ while maintaining electrode durability remained a significant challenge. According to another embodiment of the invention, flexible, hydrophobic, nanoporous polyethylene (nanoPE) membranes were used for their substantial gas permeability, allowing for $CO_2$ access and adsorption on the catalyst surface at a variety of $CO_2$ flow rates, leading to a high CO production selectivity of ~ 92% faradaic efficiency, and generating one of the highest geometric current density of CO production (~ 25.5 mA cm$^{-2}$) at -0.6 V vs. reversible hydrogen electrode (RHE) with a very thin catalyst thickness of 20 - 80 nm. The current embodiment provides direct gas delivery to the catalyst while having efficient three-phase contact (solid catalyst, liquid, and gas), which presents a new paradigm for a broad range of catalytic reactions.

The electrochemical carbon dioxide reduction reaction ($CO_2$RR) has attracted great research interest as a carbon neutral route for a renewable energy future. Competing with the dominant electrochemical proton reduction pathway to $H_2$ in aqueous solutions, also known as the hydrogen evolution reaction (HER), the multi-proton and multi-electron $CO_2$RR pathways are kinetically sluggish and require excessive reducing potentials. Substantial efforts have been invested to developing heterogeneous electrocatalysts with enhanced $CO_2$RR activities, including metals (e.g. Au, Cu, Ag, Pd, Sn), metal oxides and chalcogenides, and carbon-based materials, with particular emphasis on the optimization of their catalytic performances by tailoring particle morphology, size, thickness, grain-boundaries and defect density.

On the other hand, the efficient accessibility of the catalyst to high concentrations of $CO_2$ molecules is critical but generally deficient. The challenge here is that in water, the ratio of $CO_2$ to water molecules is only ~ 1: 1300 at 1 atm pressure. Increasing the $CO_2$ concentration by increasing pressure has a limited effect and introduces a nontrivial constraint for practical applications. Recently a high local electric field at gold nanotips was shown to enhance local $CO_2$ concentrations, resulting in an extremely high current density of conversion to CO (1.1 mA cm$^{-2}$, based on electrochemical active surface area) with high selectivity, which highlights the importance of the catalyst access to the high concentration $CO_2$. Gas diffusion layer (GDL) electrodes, typically formed from polytetrafluoroethylene (PTFE) treated porous carbon membranes, are widely applied to help gas transport to the electrochemical interface, such as in fuel cells and $CO_2$ electrocatalysis. However, excessive electrolyte contact over extended use tends to reduce the hydrophobicity of a GDL electrode (GDE), which is known as flooding, thus hindering the mass transport and resulting in poor durability and degradation. Alkaline metal ions mediated adsorption was explored to increase the catalyst surface concentration of $CO_2$ molecules, although the effect is limited by solubility of the relevant salts. High pH electrolytes were reported to achieve higher current densities than in close-to-neutral pH electrolytes (e.g. 0.5 M KHCO$_3$), while the high alkalinity inevitably results in a significant reaction with $CO_2$, thus requiring constant flow of the KOH electrolyte to compensate for the reaction loss. The current invention provides a paradigm shift in redesigning an electrode structure to directly deliver high concentrations of gas phase $CO_2$ molecules to the catalyst surface with minimum alkaline consumption, which however would require the efficient three-phase contact of $CO_2$ (gas), $H_2O$ (liquid) and catalyst (solid) for electrochemical $CO_2$RR.

According to one embodiment, the invention provides a device that includes a highly flexible nanoporous polyethylene (nanoPE) membrane sputtered with a layer of Au nanocatalyst on one side. With the hydrophobic property of nanoPE, this "artificial alveolus" structure can realize larger amount of catalytic active sites at the three-phase interface and the local pH tuning in the pouch, which are highly beneficial for electrochemical $CO_2$RR. According to the current embodiment, a faradaic efficiency (FE) of ~92% and a high geometric current density for CO production of ~ 25.5 mA cm$^{-2}$ were achieved for electrochemical $CO_2$ reduction at -0.6 V versus reversible hydrogen electrode (RHE).

To fabricate the bilayer pouch-type "artificial alveolus" structure, gold nanoparticles with ~20 nm in size were first deposited onto one side of a 12-$\mu$m thick flexible, hydrophobic, nanoPE membrane (designated as flat Au/PE) by magnetron sputtering. Such nanoPE can be mass-produced in a roll-to-roll fashion with an extremely low cost and features interconnected fibers with a collection of pore radius sizes ranging from 40 to 500 nm. The hydrophobic and nanoporous nature of nanoPE makes it impermeable to water but allows gas to diffuse through. Here Au is chosen to be a model catalyst as it can catalyze the electrochemical reduction of $CO_2$ to CO. To mimic the closed alveolus with bronchioles for gas transfer in and out of the mammalian lung, one piece of the flat Au/PE membrane is then rolled up and sealed to form a single-layered or bilayer pouch-type structure. In the bilayer pouch-type structure, the central sealed compartment is separated from the external electrolyte by the water-impenetrable nanoPE membrane and connected to one inlet for the $CO_2$ to flow in, from which $CO_2$ can then diffuse into the pores of the nanoPE membrane, subsequently throughout the whole nanoporous framework inside the membrane. To enable the ion exchange between the interlayer electrolyte and external bulk electrolyte, several pinholes with ~300 $\mu$m diameters are punched on the outside layer membrane. Due to the internal pressure induced by $CO_2$ in an enclosed environment, along with the strongly hydrophobic nature and nanoporous structure of nanoPE, the electrolyte can wet the Au catalyst surface but not the PE or nanopores, which allows the $CO_2$ gas to diffuse into the nanoPE membrane to contact with the Au and water directly, forming an array of robust and efficient three-phase contact interfaces between the Au/$H_2O$/$CO_2$ for $CO_2$RR. In contrast, a conventional flat structure surrounded by the electrolyte can only utilize the $CO_2$ dissolved in the electrolyte, which results in insufficient three-phase contact interfaces and subsequently lower activity and selectivity for a flat structure. For comparison, Au on the PTFE-coated carbon paper (Toray TGP-H-060) and the Si wafer (designated as Au/C and Au/Si, respectively), were also prepared with the same sputtering method and their surface morphologies were also characterized by SEM.

In addition, the contact angle measurements were conducted to compare the hydrophobicity change of the Au/PE membrane and Au/GDE, respectively, after 24 h continuous electrochemical testing under -1.0 V using an electrochemical reactor developed in previous work. The contact angle on the gas phase side of the GDE decreased significantly from 148° to 119°, whereas the contact angle on the gas phase side of the nanoPE underwent a much smaller change (decreasing from 109° to 105°), indicating that Au/PE membrane is much more stable than GDE. The Energydispersive X-ray spectroscopy (EDX) mapping characterization of the Au/PE membrane after 24 h electrochemical testing in a K$^+$-containing electrolyte shows that the electrolyte can only wet the same depth as the Au layer thickness for the Au/PE, whereas K$^+$ penetrates through the GDE under similar conditions, suggesting the robustness of the solid-liquid-gas three-phase of the Au/PE structure after long-term use. Moreover, due to its ultrathin thickness (12 $\mu$m, cross-section SEM), the nanoPE is super-flexible, and it can be rolled up to form single- or bi-layered pouch-type structures with a bending diameter even less than 1 mm without cracking, significantly surpassing the thinnest flexible commercial carbon GDE with a thickness of ~300 $\mu$m.

The electrochemical $CO_2$ reduction activity of Au/PE membranes was first investigated in an H-type electro-chemical cell[44] separated by a selemion anion exchange membrane with $CO_2$-saturated 0.5 M KHCO$_3$ as the electrolyte. Au/C and Au/Si deposited with a similar thickness of Au were also tested for comparison. Linear sweep voltammetry (LSV) curves show that the bilayer Au/PE membrane exhibits the best performance among these samples. As the initially stabilized current density varies slightly due to capacitive current, the onset potential is defined as the potential at which the current density is 0.2 mA cm$^{-2}$ higher than the initially stabilized current density of each sample. The onset potentials and overpotentials for the bilayer Au/PE, flat Au/C and flat Au/Si electrodes are listed in **Table 1.** According to the current invention, the potentials reported are all converted into RHE. The bilayer Au/PE membrane exhibits the lowest onset potentials of -0.27 V (corresponding to 160 mV overpotential for $CO_2$/CO), and the highest total geometric current densities ($j_{tot}$) at different applied potentials. For instance, at -0.6 V, the $j_{tot}$ values of the Au/PE, Au/C and Au/Si are -26.6, -2.7 and -0.6 mA cm$^{-2}$, respectively.

**Table 1. The onset potentials and overpotentials for the bilayer pouch-type Au/PE, flat Au/C and flat Au/Si**

|  | initial current density (mA cm$^{-2}$) | Onset potential (V)[a] | Overpotential (mV) vs. 0.11 V |
|---|---|---|---|
| **Bilayer panch-type Au/PE** | **0.8** | **-0.27** | **160** |
| Flat Au/C | 0.1 | -0.37 | 260 |

(continued)

| | initial current density (mA cm$^{-2}$) | Onset potential (V)[a] | Overpotential (mV) vs. 0.11 V |
|---|---|---|---|
| Flat Au/Si | 0.07 | -0.49 | 380 |

[a] Onset potential (V) @0.2 mA cm$^{-2}$ higher than the initially stabilized current density

The electrochemical reduction products were then examined by applying several fixed potentials between -0.3 and -1.0 V, during which the gas products were periodically sampled and quantified by an on-line gas chromatography. According to one embodiment, CO and $H_2$ were the two dominant products, together with an overall FE larger than 95%. More importantly, the bilayer Au/PE membrane exhibits much higher FEs for $CO_2$ reduction to CO than $H_2$ generation in the whole voltage range from -0.4 to -1.0 V, with the highest $FE_{CO}$ value of ~ 92% at -0.6 V. In contrast, Au/C

and Au/Si show substantially much higher FEs for $H_2$ generation and lower values of $FE_{CO}$ of < 60% and < 20% in the whole voltage window tested. At a fixed layer spacing of 1 mm, $FE_{CO}$ at -0.6 V of different layered Au/PE was compared. The FEco first increases with increasing layer number from a flat to single-layered pouch and then decreases with tri-layered pouch with a maximal value of ~ 92% for bilayer pouch-type structure.

The $CO_2$ reduction activities of different catalysts were further examined with respect to their geometric surface areas (i.e., geometric $j_{CO}$) and electrochemical surface areas (ECSAs, normalized $j_{CO}$). The ECSAs were measured by an oxygen monolayer chemisorption method, and the electrochemical roughness factors (RFs, defined as the ratio between ECSA and geometric surface area) of these catalysts were calculated (**Table 2**). The bilayer Au/PE presents the highest CO production reactivity in both geometric $j_{CO}$ and normalized $j_{CO}$ values than those of Au/C and Au/Si, indicating a much higher catalytic activity per electrochemically reactive site. To emphasize the significance of our alveolus-inspired catalyst design for the $CO_2$ access and reduction, the $CO_2$RR current density normalized by the geometric surface area (i.e., geometric $j_{CO}$) of the bilayer Au/PE membrane was further plotted with results from recent representative literature. According to one embodiment, the current density represents one of the highest values reported to date, which is highly remarkable given the thin catalyst loading (**Table 3,** all tested in 0.5 M KHCO$_3$). This comparison can be further highlighted by plotting the saturated normalized current density with different catalyst layer thicknesses in the literature (**FIG. 6**). Considering the total Au thickness on a bilayer PE membrane, the Au catalyst loading was 0.154 mg cm$^{-2}$, which was about 8-10% of the average loadings in other work (typically 1-2 mg cm$^{-2}$). The thickness of the porous catalyst layer used in GDEs is even larger and typically in the range from 5 to 20 $\mu$m[48]. In spite of the much thinner thickness of the Au catalyst (i.e., 20-80 nm in this work vs. several microns in other work), our bilayer Au/PE achieves a high saturated normalized current density of 1.0 mA cm$^{-2}$ at -0.8 V, which exceeds that of most other catalysts with much larger catalyst thicknesses and is comparable to the record performances of Au nanoneedles with ~100 times greater thicknesses. This exceptional performance indicates that improved catalyst access to $CO_2$ through increased $CO_2$ permeability of the alveolus-mimicking Au/PE leads to higher intrinsic $CO_2$RR activities.

**Table 2. The geometric surface area, electrochemical surface areas (ECSAs), and roughness factor (RF) of different electrocatalysts.**

| | Geometric area (cm$^2$) | ECSA (cm$^2$) | Roughness factor |
|---|---|---|---|
| **Bilayer pouch-type Au/PE** | **0.48** | **23.89** | **49.8** |
| Flat Au/PE | 1.50 | 15.57 | 10.4 |
| Flat Au/C | 1.35 | 17.46 | 21.6 |
| Flat Au/Si | 0.90 | 2.043 | 3.4 |

# Table 3. Comparison of a bilayer Au/PE electrode with other Au catalysts for

## CO$_2$ reduction.

| Sample | Thickness (μm) | Potential vs RHE (mV) | FE | Geometric $j_{co}$ (mA/cm$^2$) | Roughness factor | Normalized $j_{co}$ (mA/cm$^2$) | Saturated normalized $j_{co}$ (mA/cm$^2$) |
|---|---|---|---|---|---|---|---|
| Bilayer Au/PE[This work] | 0.08 | 600 | 92% | 25.5 | 49.8 | 0.51 | 1.0 @-0.8 V |
| Au/C[This work] | 0.04 | 600 | 47% | 2.0 | 21.6 | 0.06 | 0.09 @-0.8 V |
| Au/Si[This work] | 0.02 | 600 | 7% | 0.2 | 3.4 | 0.01 | 0.06 @-0.8 V |
| Au needle[ref. 22] | 2~5 | 600 | ~95% | ~60 | 53.28 | ~1.1 | 1.1 @-0.5 V |
| Au rod[ref. 22] | 0.5~1 | 600 | ~60% | ~3.7 | 34 | ~0.11 | 0.11 @-0.5V |
| Au particle[ref. 22] | 0.5~1 | 600 | ~23% | ~1.2 | 12 | ~0.09 | 0.09 @-0.5V |
| Oxide-derived Au[ref. 19] | 1~2 | 600 | - | ~17 | 72 | ~0.24 | 0.24 @-0.5V |
| Meso-Au[ref. 17] | 2.7 | 600 | ~78% | ~5.7[a] | 27 | 0.21[a] | 0.22 @-0.63V |
| Meso-Au[ref. 17] | 0.5 | 600 | ~66% | ~2.3[a] | 4 | 0.58[a] | 0.61 @-0.64V |

[a] iR-compensated: Electrode potentials were corrected for the uncompensated ohmic loss (iRu) in situ via the current interrupt method.

The distinctive feature of the high CO$_2$ permeability across Au/PE membranes was further demonstrated by measuring electrocatalysis at different CO$_2$ gas flow rates. Normally, an increase of CO$_2$ concentration around the catalyst surface leads to an increase of both CO$_2$RR conversion yield and selectivity, and previous reports have shown that much higher CO$_2$ partial pressures and concentrations are needed to achieve FE$_{CO}$ saturation. Nonetheless, a striking difference is observed for the bilayer Au/PE membrane. The overall geometric current density of the bilayer Au/PE membrane continues to enhance with increasing CO$_2$ flow rates from 1 to 20 standard cubic centimeters per minute (sccm) and saturates at higher flow rates of 30 and 50 sccm, suggesting that the CO production saturates at higher CO$_2$ flow rates. The corresponding FE$_{CO}$ value, however, quickly increases with the CO$_2$ flow rate from 1 to 5 sccm, reaches a plateau of > 85% at 5 sccm, and remains high at larger flow rates, significantly differing from previous reports. This unique characteristic of FE$_{CO}$ saturation at low CO$_2$ flow rates is attributed to the nanoporous surface feature of the Au/PE membrane, which allows for extremely efficient gas permeability and exchange, similar to an alveolus for gas exchange. For the flat Au/C structure, the overall geometric current density does not change much above 2 sccm, indicating less activity for the flat Au/C. Moreover, the electrochemical stability of the bilayer Au/PE membrane was evaluated at a constant -0.6 V in CO$_2$-saturated 0.5 M KHCO$_3$. Except for a quick drop of current density in the first several minutes, the current density was well maintained for over 35 h. The FE$_{CO}$ value was also well maintained during the whole process, with only a slight decay from 92% to 80%. In addition, no flooding was observed in the Au/PE membrane after 35 h of continuous electrochemical testing, indicating the excellent stability of this system.

The observation that our bilayer Au/PE architecture outperforms the flat nanoPE or the GDE architecture in a close-to-neutral solution (e.g. $CO_2$-saturated 0.5 M $KHCO_3$) can be explained by the increased alkalinity between different layers of a bilayer Au/PE. Previous theoretical calculations indicated that both the $CO_2$RR and HER processes lead to an increase of alkalinity near the electrode/catalyst surface, and the local pH can be up to 6 units higher than in the bulk pH. The increased surface pH, in turn, restricts the availability of protons on the surface and significantly inhibits the HER activity, thereby increasing the number of active sites available for $CO_2$RR. In addition, a high pH is also beneficial for the activation of $CO_2$ in solution. However, under conventional conditions such as in H-type electrochemical cells, this proton depletion condition, which improves the $CO_2$RR selectivity over HER, is difficult to maintain due to strong turbulence-induced stirring effects for $CO_2$ transport to/from the catalyst surface. Although increasing the alkalinity of the bulk solution (such as using 3 M KOH) can also provide a high current density, this KOH bulk solution can substantially react with $CO_2$, thus reducing the available $CO_2$ concentration and decreasing the solution pH gradually. Hence, the GDE flow reactor requires constantly flowing KOH electrolyte to compensate the reaction loss, which inevitably consumes a large amount of alkaline electrolyte and is economically unfavorable in the future scale-up stage.

In the bilayer Au/PE structure embodiment, besides the abundant and catalytically stable active sites at the three-phase interface, a higher pH value can also be well controlled in the interlayer of the bilayer structure, which was identified by a phenolphthalein experiment. No excessive flowing of high alkalinity electrolyte is needed as necessary for a GDE. The superior $CO_2$RR performance on the bilayer Au/PE structure is attributed to the synergetic effect of three-phase interface and high local pH at the active sites. For instance, the flat Au/PE electrode shows a higher current density in 3 M KOH than in 0.5 M $KHCO_3$, indicating the benefit of increased alkalinity. However, the current density is still lower than the bilayer Au/PE electrode in 0.5 M $KHCO_3$, elucidating the synergistic effect of the three-phase interface and elevated alkalinity for the $CO_2$ reduction.

The effect of the bilayer Au/PE structure for inhibiting water reduction can be clearly seen by the comparison of its electrochemical performances with that of the flat Au/PE, where the latter generates not only a much lower total current density, but also much lower $FE_{CO}$ values, with a peak value of ~ 70% at -0.6 V. A further increase of the catalyst loading of the flat Au/PE structure to the same geometry catalyst loading of the bilayer Au/PE (i.e. 0.154 mg $cm^{-2}$) can only improve the electrochemical performance negligibly. The dependence of the bilayer Au/PE membrane performance on the nanoPE layer spacing was further studied. With a bilayer Au/PE structure, an optimal $FE_{CO}$ is achieved with a layer spacing of ~ 1 mm. The optimization of the layer spacing allows for effective enhancement of the $CO_2$ transport and adsorption, while at the same time reducing water diffusion between the interspacing of nanoPE membranes and the bulk electrolyte. Moreover, both pristine PE and Au/PE membranes show large contact angles of 106° and 83° degrees, indicating their hydrophobic and slightly hydrophilic surface. After hydrophilic treatment by plasma, the contact angles were substantially reduced to 46° and 36° degrees. The hydrophilic treatment of the Au/PE membrane leads to a clear increase of HER and a corresponding decrease of $CO_2$RR, indicating the loss of selective gasversus-liquid permeability.

Finally, the geometric and normalized current densities of HER ($j_{H2}$) are plotted for these catalysts. Although the geometric $j_{H2}$ plot shows that the bilayer Au/PE has a similar current density as flat Au/PE for $H_2$ production, the normalized $j_{H2}$ of the bilayer Au/PE membrane is about an order of magnitude lower than that of the flat Au/PE and is also lower than that of both Au/C and Au/Si. This substantially depressed $j_{H2}$ indicates that only a small proportion of its ECSA contributes to $H_2$ production, likely due to the inhibition of OH$^-$ diffusion and subsequent depletion of protons inside the bilayer structures. Taken together, the normalized $j_{CO}$ and $j_{H2}$ clearly represent the corresponding activities of a unit Au catalytic site, and as such, the bilayer Au/PE presents the highest $CO_2$RR activity but the lowest HER activity.

According to the current invention, to elucidate the artificial alveolus (bilayer pouch-type) electrode structural superiority to conventional flat electrode structure, a facile sputtering method was used to directly deposit polycrystalline Au nanoparticles on different substrates, which initially do not show high activity or selectivity for CO production, as indicated in the results on flat Au/PE, Au/C, and Au/Si samples. In contrast, the bilayer Au/PE architecture achieves a high CO production selectivity of ~ 92% FE and one of the highest geometric current densities of CO production (~ 25.5 mA $cm^{-2}$) at -0.6 V, with a very thin catalyst thickness of 20 - 80 nm. Another unique feature of our design is the capability to switch between a conventional flat electrode structure and an alveolus-mimicking bilayer pouch-type Au/PE architecture that contacts with one gas phase and two electrolytes of different alkalinities, thus enabling a direct and unambiguous comparison of these two structures using the same catalyst. This significantly enhanced $CO_2$RR activity using the same catalyst can provide key structure-activity insights for efficient $CO_2$ reduction that are not available in previous studies. **FIG. 6** shows a comparison of the saturated normalized current densities of CO production versus catalyst thickness for representative Au catalysts in the literature.

In a further embodiment of the invention, the hydrophobic PE membranes for OER and HER can also be integrated with other hydrophilic nanoporous films (e.g. cellulosic material) to allow fast water adsorption by capillary action, active electrocatalytic reaction at the three-phase interface, and then efficient gas (product) separation from the porous hydrophobic PE membranes. By directly diffusing the product species in the gas phase, it saves the energy required to counteract the surface tension to collapse a bubble. Moreover, a major cost barrier of electrochemical production is the physical size of the chemical plants. This idea introduces effective 3D electrolysis with the potential to build high electrolysis devices. **FIG. 7** shows schematics drawings of overall watersplitting combining OER and HER. Water is adsorbed by capillary action of cellulose/polyester membrane. Gas (product) separation is achieved by directly diffusing the product species in the gas phase through the PE membrane.

In a further embodiment, **FIGs. 8A-8C** show a schematic drawings of a 3D integrated electrolysis with the potential to build high electrolysis devices, according to the current invention.

The present invention has now been described in accordance with several exemplary embodiments, which are intended to be illustrative in all aspects, rather than restrictive. Thus, the present invention is capable of many variations in detailed implementation, which may be derived from the description contained herein by a person of ordinary skill in the art. For example, the invention can be applied to all gas evolution reactions and gas harnessing reaction.

## Claims

1. An electrochemical gas conversion device, comprising:

   a) a flexible nanoporous polyethylene, PE, membrane formed in a sack-shape, wherein said membrane is gas permeable and liquid-impermeable, wherein at least a portion of said flexible membrane is surrounded by a electrolyte solution held by a housing, wherein said flexible membrane comprises a gas interior, wherein said membrane has a thickness of up to 12 $\mu$m and pore sizes up to a 500nm pore radius;
   b) an electrically conductive catalyst coating on an exterior surface of said flexible membrane, wherein said flexible membrane and said electrically conductive catalyst coating are configured as an anode or a cathode; and
   c) an inlet/outlet tube configured to flow said gas to said interior, from said interior, or to and from said interior of said flexible membrane;

   wherein a gas composition in said flexible membrane, a composition of said liquid solution, a thickness of said flexible membrane, a porosity of said flexible membrane, and a composition of said catalyst coating are configured for at least one of a $CO_2$ Reduction Reaction ($CO_2$RR), an Oxygen Reduction Reaction (ORR), an Oxygen Evolution Reaction (OER), a Hydrogen Evolution Reaction (HER), a Hydrogen Oxidation Reaction (HOR), or a Nitrogen Reduction Reaction (NRR).

2. The electrochemical gas conversion device of claim 1, wherein said electrolyte solution is selected from the group consisting of a potassium hydroxide electrolyte, and a potassium bicarbonate electrolyte.

3. The electrochemical gas conversion device of claim 1, wherein said electrically conductive catalyst coating comprises an electrocatalysts.

4. The electrochemical gas conversion device of claim 1, wherein said membrane further comprising a hydrophilic nanoporous film integrated with said membrane, wherein said hydrophilic nanoporous film is disposed to absorb said electrolyte solution continuously from a electrolyte solution reservoir.

5. The electrochemical gas conversion device of claim 1, wherein said $CO_2$RR configuration comprises a $CO_2$ gas composition, a $H_2O$ liquid composition, an Au catalyst layer having a thickness in a range of 10 to 20 nm, wherein said Au catalyst layer comprises Au nanoparticles having a particle diameter in a range of 10 to 30 nm.

6. The electrochemical gas conversion device of claim 1, wherein said ORR configuration comprises an $O_2$ gas composition, a $H_2O$ liquid composition, a bi-layer Ag/Pt catalyst having a thickness in a range of 50 nm to 80 nm.

7. The electrochemical gas conversion device of claim 1, wherein said OER configuration comprises an $O_2$ gas composition, a $H_2O$ liquid composition, an Au/Ni/FeOx catalyst layer having a thickness in a range of 50 nm to 100 nm.

8. The electrochemical gas conversion device of claim 1, wherein said HER configuration comprises an $H_2$ gas composition, a $H_2O$ liquid composition, an Ag/Pt catalyst layer having a thickness in a range of 40 nm to 80 nm.

9. The electrochemical gas conversion device of claim 1, wherein said HOR configuration comprises an $H_2$ gas composition, a $H_2O$ liquid composition, an Ag/Pt catalyst layer having a thickness in a range of 40 nm to 80 nm.

10. The electrochemical gas conversion device of claim 1, wherein said NRR configuration comprises an $N_2$ gas composition, a $H_2O$ liquid composition, an Au catalyst layer having a thickness in a range of 10 nm to 20 nm.

**Patentansprüche**

1.  Vorrichtung zur elektrochemischen Gasumwandlung, umfassend:

    a) eine flexible, nanoporöse Polyethylen- (PE-)Membran, die in einem Sackverlauf gebildet ist, wobei die Membran gasdurchlässig und flüssigkeitsundurchlässig ist, wobei mindestens ein Abschnitt der flexiblen Membran von einer Elektrolytlösung umgeben ist, die von einem Gehäuse gehalten wird, wobei die flexible Membran einen Gasinnenraum umfasst, wobei die Membran eine Dicke von bis zu 12 $\mu$m und Porengrößen bis zu einem Porenradius von 500 nm hat;
    b) eine elektrisch leitfähige Katalysatorbeschichtung auf einer Außenfläche der flexiblen Membran, wobei die flexible Membran und die elektrisch leitfähige Katalysatorbeschichtung als eine Anode oder eine Kathode konfiguriert sind; und
    c) ein Einlass-/Auslassrohr, das so konfiguriert ist, dass es das Gas zu dem Innenraum, von dem Innenraum oder zu und von dem Innenraum der flexiblen Membran strömt;

    wobei eine Gaszusammensetzung in der flexiblen Membran, eine Zusammensetzung der flüssigen Lösung, eine Dicke der flexiblen Membran, eine Porosität der flexiblen Membran und eine Zusammensetzung der Katalysatorbeschichtung für mindestens eine von einer $CO_2$-Reduktionsreaktion ($CO_2$RR), einer Sauerstoff-Reduktionsreaktion (ORR), einer Sauerstoff-Verlaufsreaktion (OER), einer Wasserstoff-Entwicklungssreaktion (HER), einer Wasserstoff-Oxidationsreaktion (HOR) oder einer Stickstoff-Reduktionsreaktion (NRR) konfiguriert sind.

2.  Vorrichtung zur elektrochemischen Gasumwandlung nach Anspruch 1, wobei die Elektrolytlösung aus der Gruppe ausgewählt ist, die aus einem Kaliumhydroxid-Elektrolyt und einem Kaliumbicarbonat-Elektrolyt besteht.

3.  Vorrichtung zur elektrochemischen Gasumwandlung nach Anspruch 1, wobei die elektrisch leitfähige Katalysatorbeschichtung einen Elektrokatalysator umfasst.

4.  Vorrichtung zur elektrochemischen Gasumwandlung nach Anspruch 1, wobei die Membran ferner einen hydrophilen nanoporösen Film umfasst, der in die Membran integriert ist, wobei der hydrophile nanoporöse Film so angeordnet ist, dass er die Elektrolytlösung kontinuierlich aus einem Elektrolytlösungsreservoir absorbiert.

5.  Vorrichtung zur elektrochemischen Gasumwandlung nach Anspruch 1, wobei die $CO_2$RR-Konfiguration eine $CO_2$-Gaszusammensetzung, eine $H_2O$-Flüssigkeitszusammensetzung, eine Au-Katalysatorschicht umfasst, die eine Dicke in einem Bereich von 10 bis 20 nm hat, wobei die Au-Katalysatorschicht Au-Nanopartikel umfasst, die einen Partikeldurchmesser in einem Bereich von 10 bis 30 nm haben.

6.  Vorrichtung zur elektrochemischen Gasumwandlung nach Anspruch 1, wobei die ORR-Konfiguration eine $O_2$-Gaszusammensetzung, eine $H_2O$-Flüssigkeitszusammensetzung, einen zweischichtigen Ag/Pt-Katalysator umfasst, der eine Dicke in einem Bereich von 50 nm bis 80 nm hat.

7.  Vorrichtung zur elektrochemischen Gasumwandlung nach Anspruch 1, wobei die OER-Konfiguration eine $O_2$-Gaszusammensetzung, eine $H_2O$-Flüssigkeitszusammensetzung, eine Au/Ni/FeOx-Katalysatorschicht umfasst, die eine Dicke in einem Bereich von 50 nm bis 100 nm hat.

8.  Vorrichtung zur elektrochemischen Gasumwandlung nach Anspruch 1, wobei die HER-Konfiguration eine $H_2$-Gaszusammensetzung, eine $H_2O$-Flüssigkeitszusammensetzung, eine Ag/Pt-Katalysator-Schicht umfasst, die eine Dicke in einem Bereich von 40 nm bis 80 nm hat.

9.  Vorrichtung zur elektrochemischen Gasumwandlung nach Anspruch 1, wobei die HOR-Konfiguration eine $H_2$-Gaszusammensetzung, eine $H_2O$-Flüssigkeitszusammensetzung, eine Ag/Pt-Katalysator-Schicht umfasst, die eine Dicke in einem Bereich von 40 nm bis 80 nm hat.

10. Vorrichtung zur elektrochemischen Gasumwandlung nach Anspruch 1, wobei die NRR-Konfiguration eine $N_2$-Gaszusammensetzung, eine $H_2O$-Flüssigkeitszusammensetzung, eine Au-Katalysator-Schicht umfasst, die eine Dicke in einem Bereich von 10 nm bis 20 nm hat.

**Revendications**

1. Dispositif de conversion de gaz électrochimique, comprenant :

    a) une membrane flexible en polyéthylène nanoporeux, PE, formée en forme de sac, dans lequel ladite membrane est perméable aux gaz et imperméable aux liquides, dans lequel au moins une partie de ladite membrane flexible est entourée d'une solution électrolytique maintenue par un boîtier, dans lequel ladite membrane flexible comprend un intérieur gazeux, dans lequel ladite membrane a une épaisseur allant jusqu'à 12 μm et des tailles de pore allant jusqu'à un rayon de pore de 500 nm ;
    b) un revêtement catalytique électriquement conducteur sur une surface extérieure de ladite membrane flexible, dans lequel ladite membrane flexible et ledit revêtement catalytique électriquement conducteur sont configurés comme une anode ou une cathode ; et
    c) un tube d'entrée/sortie configuré pour faire circuler ledit gaz vers ledit intérieur, depuis ledit intérieur, ou vers et depuis ledit intérieur de ladite membrane flexible ;

    dans lequel une composition de gaz dans ladite membrane flexible, une composition de ladite solution liquide, une épaisseur de ladite membrane flexible, une porosité de ladite membrane flexible et une composition dudit revêtement catalytique sont configurées pour au moins l'une parmi une réaction de réduction de $CO_2$ ($CO_2RR$), une réaction de réduction d'oxygène (ORR), une réaction d'évolution d'oxygène (OER), une réaction d'évolution d'hydrogène (HER), une réaction d'oxydation d'hydrogène (HOR) ou une réaction de réduction d'azote (NRR).

2. Dispositif de conversion de gaz électrochimique selon la revendication 1, dans lequel ladite solution électrolytique est choisie dans un groupe composé d'un électrolyte d'hydroxyde de potassium et d'un électrolyte de bicarbonate de potassium.

3. Dispositif de conversion de gaz électrochimique selon la revendication 1, dans lequel ledit revêtement catalytique électriquement conducteur comprend un électrocatalyseur.

4. Dispositif de conversion de gaz électrochimique selon la revendication 1, dans lequel ladite membrane comprend également un film nanoporeux hydrophile intégré à ladite membrane, dans lequel ledit film nanoporeux hydrophile est disposé pour absorber ladite solution électrolytique en continu à partir d'un réservoir de solution électrolytique.

5. Dispositif de conversion de gaz électrochimique selon la revendication 1, dans lequel ladite configuration $CO_2RR$ comprend une composition de gaz $CO_2$, une composition liquide $H_2O$, une couche de catalyseur Au ayant une épaisseur dans une plage de 10 à 20 nm, dans lequel ladite couche de catalyseur Au comprend des nanoparticules Au ayant un diamètre de particule dans une plage de 10 à 30 nm.

6. Dispositif de conversion de gaz électrochimique selon la revendication 1, dans lequel ladite configuration ORR comprend une composition de gaz $O_2$, une composition liquide $H_2O$, un catalyseur bicouche Ag/Pt ayant une épaisseur dans une plage de 50 nm et 80 nm.

7. Dispositif de conversion de gaz électrochimique selon la revendication 1, dans lequel ladite configuration OER comprend une composition de gaz $O_2$, une composition liquide $H_2O$, une couche de catalyseur Au/Ni/FeOx ayant une épaisseur dans une plage de 50 nm à 100 nm.

8. Dispositif de conversion de gaz électrochimique selon la revendication 1, dans lequel ladite configuration HER comprend une composition de gaz $H_2$, une composition liquide $H_2O$, une couche de catalyseur Ag/Pt ayant une épaisseur dans une plage de 40 nm à 80 nm.

9. Dispositif de conversion de gaz électrochimique selon la revendication 1, dans lequel ladite configuration HOR comprend une composition de gaz $H_2$, une composition liquide $H_2O$, une couche de catalyseur Ag/Pt ayant une épaisseur dans une plage de 40 nm à 80 nm.

10. Dispositif de conversion de gaz électrochimique selon la revendication 1, dans lequel ladite configuration NRR comprend une composition de gaz $N_2$, une composition liquide $H_2O$, une couche de catalyseur Au ayant une épaisseur dans une plage de 10 nm à 20 nm.

**FIG. 1A**

Lung with gas diffusion out and in    **FIG. 1B**

Artificial lung catalyst with gas diffusion in and out

**FIG. 1C**

**FIG. 1D**

*FIG. 2*

*FIG. 3A*

Liquid  Gas

Membrane

Pinned contact line: $R = 2\sigma / (P_{liq} - P_{gas})$

$P_{liq} < P_{gas}$    *FIG. 3B*    $P_{liq} > P_{gas}$

Advancing contact line:

$\theta_a > 90°$                    $\theta_a < 90°$

$P_{liq,bulk}$  $\theta_a$ ↑ $r$   *FIG. 3C*   $P_{liq,bulk}$   $P_{liq}$

R

$R = r/\sin(\theta_a - 90°)$

$\theta_r$

$\theta_a$

*FIG. 3D*

1 mm

EP 3 706 889 B1

Conventional carbon-based GDL

NanoPE

FIG. 4A    0.9 kPa

$R = r/\sin(\theta_a - 90°)$

FIG. 4B    37 kPa

FIG. 5

*FIG. 6*

EP 3 706 889 B1

Anode: $2\ H_2O(l) \rightarrow O_2(g) + 4\ H^+(aq) + 4e^-$
Cathode: $4\ H^+(aq) + 4e^- \rightarrow 2\ H_2(g)$

Cellulose/polyester membrane

FIG. 7

FIG. 8A

FIG. 8B

FIG. 8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015013765 A1